# EUROPÄISCHE PATENTSCHRIFT

(11) **EP 0 442 376 B1**
(45) Veröffentlichungstag und Bekanntmachung des Hinweises auf die Patenterteilung: **22.11.1995**
(21) Anmeldenummer: 91101660.8
(22) Anmeldetag: 07.02.1991
(51) Int. Cl.: H04B 1/46

(54) **Funkeinrichtung mit mindestens zwei Funkstationen**
Radio system comprising at least two radio transceivers
Système radio comprenant au moins deux émétteurs-récépteurs

(30) Priorität: 13.02.1990 DE 4004254
(43) Veröffentlichungstag der Anmeldung: 21.08.1991
(73) Patentinhaber: Meyer, Haiko, D-34582 Borken (DE)
(72) Erfinder: Meyer, Haiko, D-34582 Borken (DE)
(74) Vertreter: Vorbeck, Wolfgang, Dr.

(56) Entgegenhaltungen:
- EP-A- 0 014 110
- US-A- 2 791 683
- US-A- 4 524 461

## Beschreibung

Die Erfindung betrifft eine Funkeinrichtung mit mindestens zwei Funkstationen jeweils zum Senden und Empfangen.

Funkeinrichtungen mit mindestens zwei Funkstationen sind bekannt. Eingesetzt werden derartige Funkeinrichtungen beispielsweise in Parkhäusern. Hierbei wird die eine Funkstation dieser Funkeinrichtung durch einen Bedienungsmann betätigt, z. B. ein Mann des Wachpersonals, die andere Funkstation befindet sich beispielsweise an der Schranke der Zu- bzw. Ausfahrt für das Parkhaus.

Die Bedienung derartiger Funkstationen erfolgt nun derart, daß für die Übermittlung von Nachrichten die an jeder Funkstation vorhandene Sprechtaste gedrückt werden muß. Bei der gegebenenfalls erforderlichen Kommunikation zwischen zwei Personen erfolgt dies wechselseitig. Derartige Funkstationen arbeiten üblicherweise im Simplex-Betrieb, d. h. das Senden und Empfangen erfolgt auf einer Frequenz. Nachteilig an der bekannten Funkeinrichtung ist, daß beide Funkstationen zur Sprachübermittlung jeweils durch Drücken der Sendetaste aktiviert werden müssen.

Aus der US-PS 27 91 683 ist eine Funkeinrichtung bekannt, die nach dem Prinzip der Trägerfrequenzsteuerung arbeitet. Hier ist das Senden und Empfangen lediglich auf verschiedenen Frequenzen oder mit getrennten Sende- und Empfangsantennen möglich.

Aus der US-PS 45 24 461 ist eine Funkeinrichtung der eingangs genannten Art bekannt. Hierbei ist ein Helm vorgesehen, der eine Sender- und Empfängereinheit und einen Radioempfänger besitzt. Die Funktionsweise ist im einzelnen derart, daß, wenn eine Kommunikation mit einer anderen Funkstation gewünscht wird, der Benutzer des Helmes in ein Mikrofon spricht und durch eine Schaltung, die auf Sprache reagiert, ein Schalterpaar aktiviert wird. Der erste Schalter unterbricht den Radioempfänger, so daß der Benutzer eine Nachricht einer entfernten Empfangsstation einer Funkstation vor einem stillen Hintergrund bzw. vor dem Hintergrund seiner eigenen Stimme übermitteln kann. Nachdem der Benutzer aufgehört hat zu sprechen, wird der Sender im Helm unterbrochen und der Empfänger im Helm wird aktiviert, so daß der Benutzer die Antwort empfangen kann. Das heißt, das Ein- und Ausschalten des Senders und Empfängers bezieht sich hier immer nur auf den Sender beziehungsweise den Empfänger, der im Helm untergebracht ist. Eine Kommunikation in dem Sinne, daß eine entfernte Funkstation in irgendeiner Weise aktiviert wird, findet hier nicht statt.

Der Erfindung liegt daher die Aufgabe zugrunde, eine Funkeinrichtung der eingangs genannten Art zu schaffen, bei der eine der beiden Funkstationen vollkommen bedienungsfrei betrieben werden kann.

Die Aufgabe wird erfindungsgemäß dadurch gelöst, daß durch die Sendefunkstation der einen Funkstation an die Empfangsfunkstation der anderen Funkstation ein Signal in Form eines Pilottones übertragen wird, durch das die Empfangsfunkstation der anderen Funkstation auf Sendung geschaltet wird, wobei das Signal durch Loslassen der Sendetaste der Sendefunkstation der einen Funkstation erzeugt wird.
Die Dauer der durch das Signal ausgelösten Sendezeit ist nach einem weiteren Merkmal der Erfindung einstellbar.

Die Schaltung für die Empfangsstation zeichnet sich dadurch aus, daß das von der Sendefunkstation ausgesandte Signal in Form eines Pilottones zunächst einer Signalauswerteeinrichtung zugeführt wird, der ein Impulsformer nachgeschaltet ist, der das Eingangssignal von Störungen befreit und in ein Steuersignal für den dem Impulsformer nachgeschalteten Speicher umwandelt.

In dem Speicher löst dieses Signal Impulse aus, die erstens eine Zeitsteuerung die die Dauer der Sendezeit bestimmt aktivieren und zweitens die Treiberstufe des Ausganges einschaltet. Durch die Treiberstufe wird der Ausgang der Empfangsfunkstation aktiviert, um Signale, beispielsweise in Form von Sprache an die Sendefunkstation übermitteln zu können. Die aktivierte Zeitsteuerung liefert nach einer einstellbaren Zeitdauer ein Signal an den Speicher, durch das der Speicher in den Ausgangszustand zurückgesetzt wird. Wird der Speicher in den Ausgangszustand zurückgesetzt, wird gleichzeitig die Treiberstufe des Ausganges ausgeschaltet. Nunmehr ist die Empfangsfunkstation wieder zur Aufnahme von Eingangssignalen bereit.

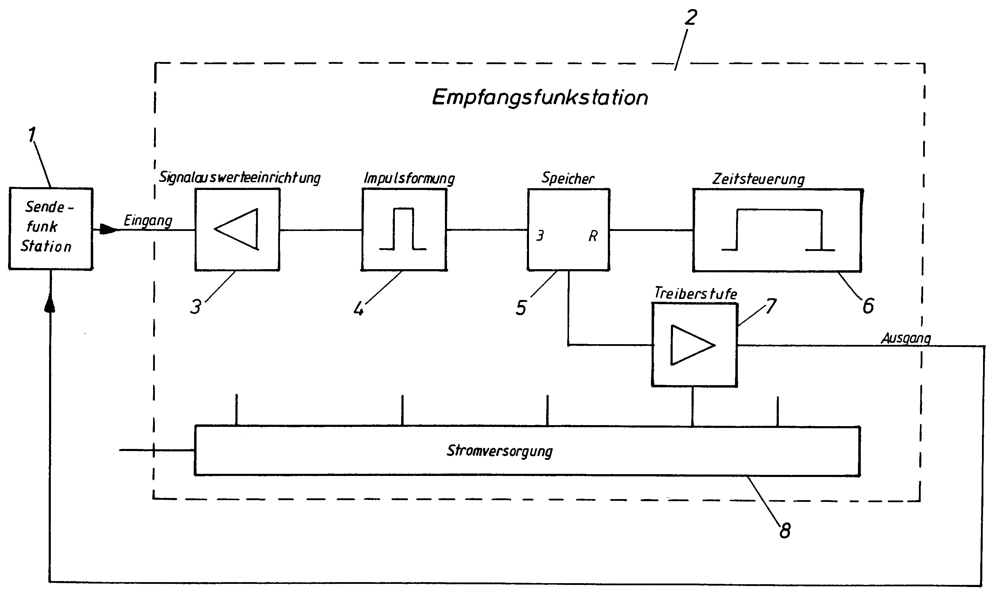

In der Zeichnung ist die Schaltung der Empfangsfunkstation in einer beispielsweisen Ausführungsform dargestellt.

Das von der Sendefunkstation 1 ausgesandte Signal wird zunächst einer Signalauswerteeinrichtung 3 zugeführt, der ein Impulsformer 4 nachgeschaltet ist, der nach Art eines Filters, das Eingangssignal, beispielsweise in Form eines Pilottones von Störungen befreit und in ein Steuersignal für den dem Impulsformer 4 nachgeschalteten Speicher 5 umwandelt.

In diesem Speicher 5 werden durch dieses Signal Impulse ausgelöst, die erstens die Zeitsteuerung 6 aktivieren und zweitens die Treiberstufe 7 des Ausganges einschalten. Die Treiberstufe 7 aktiviert den Ausgang der Empfangsfunkstation 2, um Signale, beispielsweise in Form von Sprache an die Sendefunkstation 1 übermitteln zu können.

Die aktivierte Zeitsteuerung 6, durch die die Sendezeit bestimmt wird, liefert nach einer einstellbaren Zeitdauer ein Signal an den Speicher 5, durch das der Speicher 5 in den Ausgangszustand zurückgesetzt wird.

Wird der Speicher 5 in den Ausgangszustand zurückgesetzt, erfolgt gleichzeitig das Ausschalten der Treiberstufe 7 für den Ausgang. Nunmehr ist die Empfangsfunkstation 2 wieder zur Aufnahme von Eingangssignalen der Sendefunkstation 1 bereit. Durch die Stromversorgung 8 werden die für die einzelnen Stufen notwendigen, gleichgerichteten, entkoppelten und stabilisierten Versorgungsspannungen geliefert.

## Patentansprüche

1. Funkeinrichtung mit mindestens zwei Funkstationen jeweils zum Senden und Empfangen,
**dadurch gekennzeichnet**, daß
durch die Sendefunkstation (1) der einen Funkstation an die Empfangsfunkstation der anderen Funkstation ein Signal in Form eines Pilottones übertragen wird, durch das die Empfangsfunkstation (2) der anderen Funkstation auf Sendung geschaltet wird, wobei das Signal durch Loslassen der Sendetaste der Sendefunkstation (1) der einen Funkstation erzeugt wird.

2. Funkeinrichtung nach Anspruch 1,
**dadurch gekennzeichnet,** daß
die Dauer der durch das Signal ausgelösten Sendezeit einstellbar ist.

3. Schaltung für die Empfangsstation nach Anspruch 1,
**dadurch gekennzeichnet**, daß
das Signal der Sendefunkstation (1) einer Signalauswertungeeinrichtung (3) der Empfangsfunkstation (2) zugeführt wird, wobei der Signalauswerteeinrichtung (3) ein Impulsformer (4) nachgeschaltet ist, der ein Steuersignal für den dem Impulsformer nachgeschalteten Speicher (5) erzeugt, daß durch das Steuersignal eine Zeitsteuerung (6) und eine Treiberstufe (7) aktiviert werden, wobei durch die Treiberstufe (7) der Ausgang der Empfangsfunkstation (2) aktiviert wird.

4. Schaltung für Empfangsstation nach Anspruch 5,
**dadurch gekennzeichnet,** daß
die aktivierte Zeitsteuerung (6) nach einer einstellbaren Zeitdauer ein Signal an den Speicher (5) liefert, durch das der Speicher (5) in den Ausgangszustand zurückgesetzt wird, gleichzeitig die Treiberstufe (7) für den Ausgang ausschaltet.

## Claims

1. Radio equipment with at least two radio stations each for transmitting and receiving, characterised thereby that a signal in the form of a pilot tone is transmitted by the transmitting radio station (1) of the one radio station to the receiving radio station of the other radio station, by which signal the receiving radio station (2) of the other radio station is switched to transmitting, wherein the signal is produced by releasing the transmitting key of the transmitting radio station (1) of the one radio station.

2. Radio equipment according to claim 1, characterised thereby that the duration of the transmitting time initiated by the signal is settable.

3. Circuit for the receiving station according to claim 1, characterised thereby that the signal of the transmitting radio station (1) is fed to a signal evaluating equipment (3) of the receiving radio station (2), wherein connected downstream of the signal evaluating equipment (3) is a pulse shaper (4), which produces a control signal for the store (5) connected downstream of the pulse shaper, and that a time control (6) and a driver stage (7) are activated by the control signal, wherein the output of the receiving radio station (2) is activated by the driver stage (7).

4. Circuit for receiving station according to claim 5, characterised thereby that after a settable time period the activated time control delivers to the store (5) a signal by which the store (5) is reset to the initial state and at the same time the driver stage (7) for the output is switched off.

## Revendications

1. Installation radio comportant au moins deux stations radio émettrices-réceptrices, **caractérisée** en ce qu'un signal sous forme d'un ton pilote est transmis par l'émetteur (1) de la première station au récepteur de l'autre station, signal au moyen duquel le récepteur (2) de l'autre station est commuté sur émission, ledit signal étant produit par relâchement de la touche d'émission de l'émetteur (1) de la première station.

2. Installation radio selon la revendication 1, **caractérisée** en ce que la durée de la période d' émission enclenchée par le signal est ajustable.

3. Circuit du récepteur selon la revendication 1, **caractérisé** en ce que le signal de l'émetteur est délivré à un discriminateur de signaux (3) du récepteur (2), une sortie du discriminateur de signaux (3) étant connectée à un conformateur d'impulsions (4) qui produit un signal de commande à destination de la mémoire (5) connectée au conformateur d'impulsions, et en ce que le signal de commande active une commande de temporisation (6) et un étage pilote, la sortie du récepteur (2) étant activée par l'étage pilote (7).

4. Circuit du récepteur selon la revendication 5, **caractérisé** en ce que la commande de temporisation (6), lorsqu'elle a été activée, délivre à la mémoire (5), après une durée ajustable, un signal au moyen duquel la mémoire (5) est remise à son état initial et désactive simultanément l'étage pilote (7) de la sortie.
